# EUROPEAN PATENT SPECIFICATION

(11) **EP 3 394 437 B1**
(45) Date of publication and mention of the grant of the patent: **13.04.2022**
(21) Application number: 16877729.0
(22) Date of filing: 21.12.2016
(51) Int. Cl.: F03D 7/04

(54) **METHOD AND SYSTEM OF OPERATING A WIND TURBINE FARM**
VERFAHREN UND SYSTEM ZUM BETRIEB EINES WINDTURBINENPARKS
PROCÉDÉ ET SYSTÈME D'EXPLOITATION D'UN PARC ÉOLIEN

(30) Priority: 22.12.2015 DK 201570852
(43) Date of publication of application: 31.10.2018
(73) Proprietor: Envision Energy (Jiangsu) Co., Ltd., Jiangyin 214443 (CN)
(72) Inventor: SHAH, Jigar Jayesh, Houston, TX 77063 (US); ZHANG, Feng, Houston, TX 77007 (US); WANG, Linpeng, Shanghai 200000 (CN); CHEN, Anthony Tong, Sugar Land, TX 77479 (US)
(74) Representative: Patrade A/S
(86) International application number: PCT/CN2016/111289
(87) International publication number: WO 2017/107919

(56) References cited:
- EP-A1- 2 940 296
- CN-A- 1 975 155
- CN-A- 101 413 483
- CN-A- 102 472 248
- CN-A- 103 080 540
- P.M.O. GEBRAAD ET AL: "Wind turbine wake estimation and control using FLORIDyn, a control-oriented dynamic wind plant model", 2015 AMERICAN CONTROL CONFERENCE (ACC), 1 July 2015 (2015-07-01), pages 1702-1708, XP055413503, DOI: 10.1109/ACC.2015.7170978 ISBN: 978-1-4799-8684-2

## Description

### Field of the Invention

The present invention relates to a system for operating a wind turbine farm and comprising a plurality of wind turbines each having at least two wind turbine blades mounted to a hub which is further rotatably connected to a drive train arranged in said wind turbine, wherein a remote control unit is configured to communicate with each of the wind turbines and to store environmental data retrieved from the wind turbines.

The present invention also relates to a method for controlling the operation of a wind turbine farm, wherein at least one ambient parameter is measured relative to at least one of said wind turbines and storing at least the ambient data in at least one database, and at least one upwind wind turbine and at least one downwind wind turbine are identified amongst said wind turbines based on a detected wind direction.

### Background of the Invention

Modern wind turbines are often arranged together in a wind turbine farm wherein the individual wind turbines are positioned relative to each other in a predetermined pattern. It is known that such a wind turbine farm may include wind turbines of different wind turbine manufactures, wind turbines having different power ratings and/or different sized wind turbine blades. The performance of the wind turbine farm is monitored by using a monitoring system positioned at a remote location, wherein the monitoring comprises a control unit capable of communicating with the wind turbine farm, e.g. via a SCADA link. A conventional control system provides limited control options for a third party operator to regulate the performance of the wind turbine farm.

A known problem is a wake or shadow effect caused by the wind turbines located upwind relative to the incoming wind direction. The upwind wind turbines may also generate a more turbulent airflow compared to the relative free airflow hitting the upwind wind turbines. This may in turn lead to increased loads and stresses in the downwind wind turbines located in the path of this turbulent airflow and, thus, a reduced power production from these downwind wind turbines. One way to solve this problem is to design the layout of the wind turbine farm so that the distances between the individual wind turbines are increased or to include wind turbines with different sized wind turbine blades or wind turbines having different power ratings.

US 2006/0232073 A1 discloses a control scheme for a wind turbine farm wherein the controller regulates the axial induction value of an upwind wind turbine based on the turbulence measured on a downwind wind turbine. It is stated that the axial induction of the upwind wind turbine is reduced to a value of less than 0.25 and the averaged difference in the axial inductions of the upwind and downwind wind turbines is greater than 0.05. This is achieved by regulating the pitch angle of the wind turbine blades of an upwind wind turbine towards a feathered position. It is further stated that this also can be achieved by reducing the chord length of the upwind wind turbine blades so that it has a chord characteristic of less than 3.75.

WO 2013/037374 A1 discloses a control scheme for a wind turbine farm wherein the pitch angle, yaw angle, or direction of rotation of the upwind and downwind wind turbines are regulated to increase the mixing of the turbulent airflow passing through the wind turbine farm with the uninterrupted airflow. It is stated that the downwind wind turbine must be placed at a specific distance from the upwind wind turbine to achieve an optimal mixing of the airflows, where this specific distance corresponds to one to five times the rotor diameter of the downwind wind turbine.

US 2011/0140428 A1 discloses a control system in communication with a wind turbine farm wherein the control system monitors and controls the operation of the wind turbine farm. The control system estimates the degradation level of each wind turbine based on sensor data measured on the wind turbine and the power output of the wind turbine and arranges the wind turbines in four groups. The control system then applies a dedicated power limiting algorithm to each group of wind turbines in a stepped order until the reduction in the total power output meets the limiting request received from a grid side.

US 2009/0099702 A1 discloses a method of controlling a wind turbine farm, wherein the remote control unit receives measurements from the wind turbine farm. Measurement data of adjacent wind turbines is used to identify an upwind wind turbine causing a wake condition on a downwind wind turbine. The controller then changes the control signals for the upwind wind turbine which, in turn, reduces the power output and its the rotor thrust. Only the operation of upwind wind turbines causing a wake condition is changes while the remaining upwind and downwind wind turbines are operated in a normal power production mode. It is stated that the operation of the upwind wind turbine can be adjusted until a power ratio between the upwind and downwind wind turbines reaches a predefined value. However, further details about this power ration of how to change the operation are provided.

It is noted that US 2009/0099702 builds on US 2007/0124025 that discloses a method for controlling a central processing and control unit coupled to a wind turbines in a part and selectively transmit control signals to reduce fatigue loads and comply with power limits. As is clear from US2009/009702, then US 2007/012405 is silent about details about actual implementations.

A person skilled in the art could consider US 2009/0099702 as a suitable starting point.

EP 2940296 A1 discloses a method of optimising operation of a wind farm comprising a plurality of wind turbines, where a remote farm controller receives and stores operation data from the individual wind turbines and measurements from wind sensors. The farm controller analyses the stored data to identify aerodynamically interacting wind turbines and estimate corresponding interacting wake interaction. The wake interaction is used by the farm controller to generate a predictive wake model of the wind farm in real-time. The farm controller estimates the power output of each wind turbine based on the predicted wake model, which is used by the farm controller to optimise the total power output and reduce the fatigue loads.

The article "Wind turbine wake estimation and control using FLORIDyn, a control-oriented dynamic wind plant model" by Gebradd et al. discloses the possibility to use a dynamic wake propagation model having a complex state-space form to predict the total power output of the upstream and downstream wind turbines. The model determines a wake reduction factor at the downstream wind turbine using the control settings and free flowing wind speed at the upstream wind turbine. The model uses a weighting method to estimate the wind speed and thus the power output of the downstream wind turbine. The article proposes to use the results of the wake propagation model to adjust the yaw control of the wind turbines, however the article is silent about how the wake propagation model should be implementation in a wind farm control.

There exists a need for an alternative control method of optimising the operation of a wind turbine farm which can be implemented into existing control systems of wind turbine farms.

### Object of the Invention

An object of this invention is to provide a system for operating a wind turbine farm that solves the above-mentioned problems.

An object of this invention is to provide a system for operating a wind turbine farm that provides a flexible interface for connecting to different types of wind turbines.

An object of this invention is to provide a system for operating a wind turbine farm that provides an easy access to the stored sensor data from the wind turbines.

### Description of the Invention

An object of the invention is achieved by a system for controlling the operation of a wind turbine farm, comprising a plurality of wind turbines and a remote control unit configured to communicate with said wind turbines and at least one database, the at least one database is configured to store at least ambient data retrieved from at least one ambient sensor configured to measure at least one ambient parameter, wherein each of said wind turbines comprises at least two wind turbine blades mounted to a hub which is further rotatably connected to a drive train, the remote control unit is configured to identify at least one upwind wind turbine and at least one downwind wind turbine amongst said wind turbines based on a detected wind direction, the remote control unit is configured to determine a first power output of the at least one upwind wind turbine and a second power output of the at least one downwind wind turbine, wherein the at least one upwind wind turbine is selected amongst a first group of wind turbines located upwind relative to the detected wind direction, the at least one downwind wind turbine is selected amongst at least a second group of wind turbines located downwind relative to the first group of wind turbines, and the remote control unit is further configured to determine a reduced operating level of the at least one upwind wind turbine so that, when operated according to this reduced operating level, the at least one upwind and downwind wind turbines combined increase the overall power production of the wind turbine farm, characterised in that the remote control unit is further configured to analyse the first power output and the second power output to determine a first correlation between the first power output and the second power output by statistical analysis, wherein the first correlation is indicative of an added amount of power produced by the at least one downwind wind turbine relative to a reduced amount of power produced by the at least one upwind wind turbine, and the reduced operating level of the at least one upwind wind turbine is determined based on said first correlation.

The term "upwind wind turbine" is defined as a wind turbine which is only influenced by the free airflow of the incoming wind. The term "downwind wind turbine" is defined as a wind turbine which is influenced by the turbulent airflow derived from one or more upwind wind turbines and, optionally, also from other downwind wind turbines. The term "relationship" is defined as any type of direct or indirect correlation or relationship between the respective power outputs of the upwind and downwind wind turbines, said correlation/relationship may be determined or calculated by means of statistical analysis, descriptive analysis, inferential analysis, approximation or any other suitable analysis. The term "reduced operating level" is defined as an operating level which is lower than a normal operating level at which the wind turbine is operated to produce a maximum or nominal power output. The general term "set-point" is defined as any control value or control set-point used in the wind turbine to regulate a particular operating parameter.

This provides an alternate control system for optimising the overall power production of the wind turbine farm and reducing the structural and/or dynamic loads on the individual wind turbines. This control system is also capable of altering the airflow passing through the wind turbine farm so that the turbulence experienced at the downwind wind turbines is reduced. This in turn contributes to lower the Levelized Cost of Energy (LCOE) costs for the wind turbine farm operator.

One or more ambient sensors, such as anemometers, wind vanes, LIDAR systems, humidity sensors, pressure sensors, temperature sensors, weather stations, and other suitable sensors, are positioned on or relative to the individual wind turbines or nearby the wind turbine farm. These ambient sensors are configured to measure one or more ambient parameters, such as air density, ambient temperature, ambient pressure, humidity level, wind speed, wind direction, turbulence level, and other suitable ambient parameters. The ambient parameters may be measured periodically or over a predetermined time period.

According to one embodiment, the remote control unit is configured to calculate at least a second correlation between a power output of another selected wind turbine of the first group and a power output of another selected wind turbine of the at least second group by statistical analysis, and to determine a reduced operating level of said another selected wind turbine of the first group based on said at least second correlation so that, when operated according to this reduced operating level, the another selected wind turbines combined further increase the overall power production of the wind turbine farm.

The control algorithm determines afterwards the power output of the selected wind turbines based on the historical ambient data or by power measurements. Alternatively, the control algorithm may determine the power output of each individual wind turbine prior to performing the selection step. The relationship between the power outputs of the selected wind turbines is then determined which is used afterwards to determine the operating level of the selected upwind wind turbine. This process may be repeated until all wind turbines within the respective groups have been selected and at least one relationship has been determined for each wind turbine in the respective groups.

According to one embodiment, said first and second correlations are averaged, and the averaged correlation is used to determine the reduced operating level for all upwind wind turbines of the first group.

The control unit may further determine an averaged relationship between the first group and the second group which may then be used when determining the reduced operating level for the respective upwind wind turbines in the first group. Likewise, the control unit may further determine an averaged relationship between the first group and/or the second group and the third group which may then be used when determining the reduced operating level for the respective upwind wind turbines in the first and/or second group.

According to one embodiment, the remote control unit is a server unit, wherein at least an operating system is configured to run on the server unit and to communicate with the wind turbines and the at least one database.

The control unit is located at a remote location, such as a central monitoring or control station, a server park, or another suitable location. The control unit comprises at least one server unit which is connected to at least one database in which at least the measured ambient data is stored. The database may be an internal memory unit located within the server unit or a separate memory unit connected to the server unit. The server unit and database each comprise a communications module that enables the two units to communicate with each other. Likewise, the server unit and the wind turbine farm each comprise a communications module that enables the server unit to communicate with the wind turbine farm. The server unit may communicate directly with each wind turbine or via a sub-station located in the wind turbine farm. The connection between the server unit, the wind turbine farm and the database may be a wired connection, e.g. data cables, or a wireless connection, e.g. a WIFI-connection. This allows the ambient data and other collected data to be stored and analysed at a central location. This also provides a flexible interface capable of communicating with any OEM interface using a standardised communications protocol independent of the layout of the wind turbine farm.

An operating system is implemented on the server unit, e.g. on a microprocessor thereof, and configured to provide access to the ambient data and other collected data, e.g. operating data, stored in the database. A wind turbine operator or owner may access these data via a user interface, e.g. a webpage or a dedicated graphical user interface. The operating system may be configured to process and display the stored data so that the wind turbine farm operator or owner is able to monitor the performance of the wind turbine farm. This provides an easy access to the stored data from any type of platform, such as a smartphone, a tablet, a laptop, a stationary computer, or another suitable platform.

The control algorithm of the present control system may be implemented as an add-on module or application capable of interacting with the above-mentioned operating system. Alternatively, the control algorithm may be incorporated into the operating system so that they act as a single unit. This enables the present control system to be adapted to interact with any existing remote monitoring systems having a database in which the ambient data and, optionally, the operating data are stored.

According to one embodiment, the remote unit is further configured to calculate a first energy yield of the at least one upwind wind turbine based on the first power output and a second energy yield of the at least one downwind wind turbine based on the second power output.

The first and second power outputs and, optionally, the ambient data may be used by the control unit to calculate a first and a second energy yield of the selected upwind and downwind wind turbines. The control unit may then determine a relationship between the first and second energy yields which may be used afterwards to determine the reduced operating level of the upwind wind turbine. This provides an alternative way of determining the operating level of the upwind wind turbine which takes into account the amount of energy available in the passing airflow.

According to one embodiment, at least one operating sensor is arranged in one of the wind turbines and configured to measure at least one operating parameter of said one wind turbine, wherein the at least one operating parameter is further stored in the at least one database and analysed by the control unit.

One or more of the wind turbines in the wind turbine farm may comprise one or more operating sensors, such as a vibration sensor, a rotational speed sensor, a torque sensor, an angular position sensor, a temperature sensor, a voltmeter, a wattmeter, or another suitable sensor. These operating sensors may be configured to measure one or more operating parameters, such as a vibration level, a rotational speed, a pitch angle, a yaw angle, a torque level of the rotation shaft, a cooling temperature of the cooling system, a power output, or another suitable operating parameter. These operating data may be stored in the same database as the ambient data or in a separate database. Additionally, the local control parameters, e.g. the power set-point, the pitch angle, the torque set-point, and other control parameters, used to control the operation of each wind turbine may also be stored in the database. This allows the operator or owner of the wind turbine farm to further monitor the performance and operating status, e.g. the pitch angle and the generated power output, of each wind turbine located in the wind turbine farm.

The control unit may be configured to further analyse these operating data which may be used to determine the performance of the selected upwind and downwind wind turbines. The operating data and the ambient data may be combined in the control unit when determining the power output and/or energy yield of the respective wind turbine. Alternatively, the control unit may directly determine the power output via power measurements performed by said operating sensors. The operating data are optionally used by the control unit to further calculate the current operating time of the vital components in the wind turbine or the remaining operating time before the next servicing or replacement interval. These calculated data may be combined with the above-mentioned relationship data in the control unit when determining the reduced operating level of the upwind wind turbines. This provides a suitable trade-off between the operation time of the individual wind turbines and the overall power production, which in turn reduces the Operation and Maintenance (O&M) costs.

The control unit may monitor the ambient data and/or the operating data in order to determine if the process described above should be repeated or not.

It is known to design the layout of the wind turbine farm according to the dominant wind direction at that geographical position. However, the wind direction changes relative to the layout of the wind turbine farm and, thus, the number of wind turbines facing directly into the free airflow of the incoming wind varies also. This can be solved by selecting a first group of wind turbines, e.g. at least two, according to the detected wind direction which is located upwind across the length and/or the width of the wind turbine farm. The control unit may update this first group of wind turbines each time the wind changes direction or when the change in wind direction exceeds a predetermined threshold.

The control unit is then configured to select at least one wind turbine within this first group based on one or more predetermined criteria, e.g. according to the layout.

As the wind direction changes, so does the number of wind turbines which are subjected to a wake or shallow effect from one or more upwind wind turbines. This can also be solved by selecting a second group of wind turbines, e.g. at least two, according to the detected wind direction which is located downwind from the upwind turbines. The second group may be selected across the length and/or width of the wind turbine farm, e.g. as function of the wind direction. The control unit may further update this second group of wind turbines each time the wind changes direction or when the change in wind direction exceeds a predetermined threshold.

Alternatively, the wind turbines may further be grouped in at least a third group which is located further downwind relative to the wind direction. This third group may also be selected across the length and/or width of the wind turbine farm, e.g. as function of the wind direction. Likewise, the control unit may further update this at least third group of wind turbines each time the wind changes direction or when the change in wind direction exceeds a predetermined threshold.

The control unit selects an upwind wind turbine of the first group and a downwind wind turbine of the second group and determines a relationship between these selected wind turbines as mentioned earlier. Likewise, the control unit may select an upwind wind turbine of the first and/or second group and a downwind wind turbine of the third group and determine a relationship between these selected wind turbines. In example, the wind turbines may be selected so that they are aligned or substantially aligned along the wind direction, or are offset relative to each other when seen along the wind direction. The wind turbines may be offset in a direction perpendicular to the wind direction. The relationship may be indicative of the added amount of power or energy captured by the selected downwind wind turbine relative to the reduced amount of power or energy captured by the selected upwind wind turbine.

The control unit may repeat the process and select another upwind wind turbine of the first group and another downwind wind turbine of the second group and determine another relationship between these selected wind turbines as mentioned earlier. Likewise, the control unit may repeat the process and select another upwind wind turbine of the first and/or the second group and another downwind wind turbine of the third group and determine another relationship between these selected wind turbines. The process may be repeated until all wind turbines of the first, second, and third groups have been selected.

The control unit may be configured to execute the present control algorithm at regular time intervals or when it is deemed necessary.

In example, a power reduction of 3% of an upwind turbine in the first group may result in an increase in power of 4% of a downwind wind turbine in the second and/or third group. This, in turn, gives an overall increase in the power production of the wind turbine farm.

According to one embodiment, at least the first correlation is derived from a look-up table.

The control unit may perform the calculation each time or use a look-up table to determine the reduced operation level of the selected upwind wind turbine. The look-up table comprises any suitable data, such as the wind direction, the relationship data, the first and second power output and/or energy yield of the selected wind turbines, or other suitable data. The control algorithm of the present control system optionally includes a self-learning function in which the control unit is configured to adapt the value of the respective parameters used to determine the reduced operating level of the upwind wind turbine, e.g. values of the look-up table. The control unit optionally applies an interpolation function, e.g. a linear function, a polynomial function, a spline function, or another suitable interpolation function, to the table values in order to better determine the required operating level. This allows the control unit to determine a suitable trade-off between the power or energy loss of the upwind wind turbine and the increase in power or energy of the downwind wind turbine. This allows for a more optimal control of the wind turbine farm which in turn may lead to an increase in the overall power production and/or overall operating time of the individual wind turbines.

According to one embodiment, the control unit is further configured to generate a power set-point for the at least one upwind wind turbine based on the determined reduced operating level, wherein the power set-point is lower than a normal power set-point.

The control unit is configured to generate a new power set-point for the selected upwind wind turbine based on the determined reduced operating level. The control unit may use a normal power set-point of that wind turbine as an input to generate this new and reduced power set-point. The power set-point for that wind turbine may be derived from an overall power set-point of the entire wind turbine farm. The new power set-point is then transmitted to the respective wind turbine, wherein its local control system may use a unique relationship between the power output and the pitch angle of the wind turbine blades to adjust the operation of the wind turbine according to the selected reduced operating level. In example, the wind turbine may use the received power set-point to determine a new pitch angle or set-point for pitching the wind turbine blades. The wind turbine may further adjust other control parameters, such as the rotational speed or the yaw angle, in order to reach the reduced operating level.

Conventional control systems optimise the performance of the wind turbine farms by directly regulating the pitch angle of the individual wind turbines. The present control system does not regulate the local control parameters used to control the operation of the individual wind turbines. Instead, the control unit regulates the power set-point for the respective wind turbine. This allows the selected wind turbine to independently adjust its local control parameters. This, in turn, allows the present control system to be adapted to communicate with the local control system of different wind turbine manufactures and different firmwares located in different types of wind turbines. If the configuration of the local control system permits it, the present control unit may adjust the local control parameters of the selected wind turbine.

An object of the invention is also achieved by a method for controlling the operation of a wind turbine farm, comprising a plurality of wind turbines and a remote control unit configured to communicate with said wind turbines, wherein each of said wind turbines comprises at least two wind turbine blades mounted to a hub which is further rotatably connected to a drive train, wherein the method comprises the steps of:
- measuring at least one ambient parameter using at least one ambient sensor, and storing at least the ambient data in at least one database,
- detecting a wind direction,
- selecting at least one upwind wind turbine amongst a first group of wind turbines which is located upwind relative to the detected wind direction,
- selecting at least one downwind wind turbine amongst at least a second group of wind turbines which is located downwind relative to the first group of wind turbines,
- determining a first power output of the at least one upwind wind turbine and a second power output of the at least one downwind wind turbine,
- determining a reduced operating level of the at least one upwind wind turbine,
- operating the at least one upwind wind turbine so that the at least one upwind and downwind wind turbines combined increase the overall power production of the wind turbine farm, characterised by method further comprising the steps of:
- determining a first correlation between the first power output and the second power output using statistical analysis, wherein the first correlation is indicative of an added amount of power produced by the at least one downwind wind turbine relative to a reduced amount of power produced by the at least one upwind wind turbine,
- wherein the reduced operating level of the at least one upwind wind turbine is determined based on said first correlation.

This provides an alternative control method for operating a wind turbine farm, wherein the ambient data from various ambient sensors in the wind turbine farm is accumulated and stored for later analysis. These historical ambient data may then be analysed to determine a corresponding power output of a selected upwind wind turbine and of a selected downwind wind turbine. Alternatively, the power outputs may be determined by directly measuring the power output of the selected upwind and downwind wind turbines. These power outputs are then used to determine a suitable relationship indicative of the added amount of power or energy captured by the selected downwind wind turbine relative to the reduced amount of power or energy captured by the selected upwind wind turbine. This relationship is then used to determine a reduced operating level of the selected upwind wind turbine.

This allows for an optimised power production of the wind turbine farm while reducing the structural and/or dynamic loads on the individual wind turbines. This, in turn, lowers the LCOE costs for the wind turbine farm operator. Reducing the operating level of the upwind wind turbines alters the airflow of the passing wind, and this reduces the turbulence experienced by the downwind wind turbines.

The present control method can advantageously be implemented in a remote control or monitoring system, e.g. as a separate control module coupled to an existing control/monitoring system. This allows the wind turbine farm operator or owner to access the historical ambient data, operating data, and other stored data from different platforms as described earlier.

The individual wind turbines may be divided into two or more groups according to the specific layout of the wind turbine farm and the current wind direction. Two or more upwind wind turbines facing the free airflow of the wind may be arranged in a first group. Two or more downwind wind turbines subjected to the shadow or wake effect of the upwind wind turbines may be arranged in at least a second group. The groups may be updated when the direction of the wind changes, thus a wind turbine may switch from the first group to the second group, or vice versa. This allows the wind turbines to be dynamically grouped together according to the current wind direction.

According to a special embodiment, the method further comprises the step of determining at least a second correlation between a power output of another selected wind turbine of the first group and a power output of another selected wind turbine of the at least second group using statistical analysis, and determining a reduced operating level of said another selected wind turbine of the first group based on said at least second correlation.

The control algorithm determines afterwards the power output of the selected wind turbines based on the historical ambient data or by power measurements. Alternatively, the control algorithm may determine the power output of each individual wind turbine prior to performing the selection step. The relationship between the power outputs of the selected wind turbines is then determined which is used afterwards to determine the operating level of the selected upwind wind turbine. This process may be repeated until all wind turbines within the respective groups have been selected and at least one relationship has been determined for each wind turbine in the respective groups.

According to one embodiment, the method further comprises the step of calculating a first energy yield of the at least one upwind wind turbine based on the first power output, and calculating a second energy yield of the at least one downwind wind turbine based on the second power output.

An energy yield is optionally calculated for each of the selected wind turbines using the determined power output mentioned earlier. This energy yield may be used to calculate the relationship between the selected wind turbines, alternatively another relationship may be determined using this energy yield. The operating level of the upwind wind turbine may thus be determined using the relationship mentioned above or the relationship between the energy yield of the selected upwind wind turbine and the energy yield of the selected downwind wind turbine. This allows the control algorithm to take into account the amount of energy available in the passing wind.

The amount of calculations can be reduced by generating a look-up table, wherein the reduced operating level of a respective upwind wind turbine can simply be selected according to the table values as mentioned above. Alternatively, an averaged relationship is determined based on the individual relationships, which in turn is then used for determining the reduced operating level for all the upwind wind turbines in the first group.

According to one embodiment, the method further comprises the step of generating a power set-point for the at least one upwind wind turbine based on the determined reduced operating level, wherein the power set-point is lower than a normal power set-point.

After having determined the reduced operating level, the control algorithm generates an adjusted power set-point for the respective upwind wind turbine. This adjusted power set-point is then transmitted to the respective wind turbine which, in turn, adjusts its operation accordingly.

The present control algorithm is suitable for controlling wind turbine farms having wind turbines of different manufactures or different power ratings. Also the control algorithm is able to communicate with wind turbine farms via different OEM interfaces or different firmwares.

### Description of the Drawing

The invention is described by example only and with reference to the drawings, wherein:
- Fig. 1: shows an exemplary embodiment of a control system according to the invention,
- Fig. 2: shows an exemplary flowchart of the control method according to the invention,
- Fig. 3: shows an exemplary graph of the pitch angle as function of the power output of a selected wind turbine, and
- Fig. 4: shows an exemplary graph of the power output as function of the pitch angle and the measured wind speed of a selected wind turbine.

In the following text, the figures will be described one by one, and the different parts and positions seen in the figures will be numbered with the same numbers in the different figures. Not all parts and positions indicated in a specific figure will necessarily be discussed together with that figure.

### Position number list

- 1.: Wind turbines
- 2.: Remote control unit
- 3.: Database
- 4.: Wind turbine blades
- 5.: Hub
- 6.: Drive train
- 7.: Ambient sensor
- 8.: Wind direction
- 9.: Operating sensor
- 10.: Pitch angle
- 11.: Power output
- 12.: Wind speed

### Detailed Description of the Invention

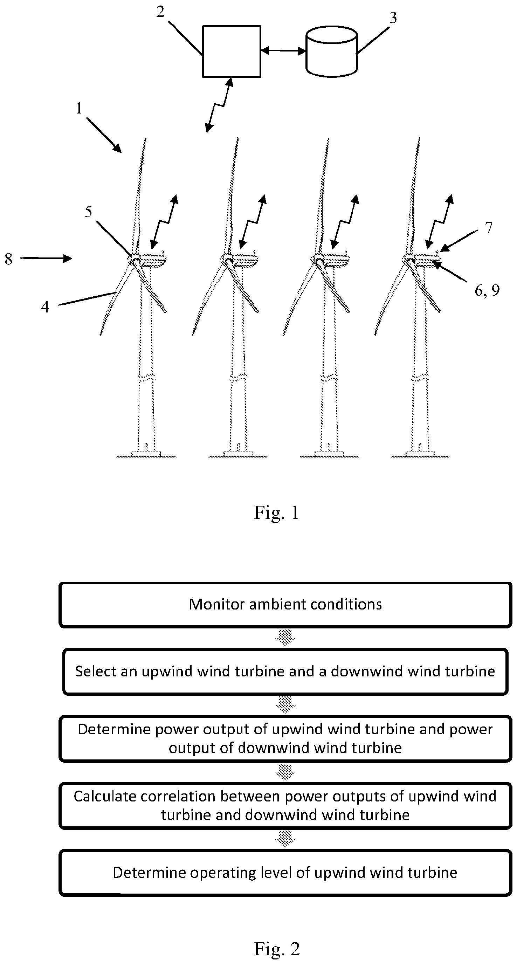

Fig. 1 shows an exemplary embodiment of the system for controlling the operation of a wind turbine farm comprising a plurality of individual wind turbines 1, here only four wind turbines are shown. The system comprises a remote control unit 2 connected to a database 3 configured to store ambient data, operating data, and other suitable data received from the wind turbine farm. The remote control unit 2 is configured to communicate with the wind turbine farm via a wired or wireless connection.

Each wind turbine 1 comprises at least two wind turbine blades 4 mounted to a hub 5 which further is rotatably connected to a drive train 6 in the wind turbine 1. The drive train 6 is configured to generate a power output which in turn is transmitted to an electrical power grid (not shown). The wind turbine 1 further comprises a communications module for communicating with a corresponding communications module in the remote control unit 2. A local control system (not shown) is used to control the operation of the wind turbine 1 using one or more local control parameters which is further able to communicate with the remote control unit 2, e.g. a controller thereof.

At least one ambient sensor 7 is arranged relative to the individual wind turbines 1. The ambient sensor 7 is configured to measure at least one ambient parameter, e.g. a wind speed, which is stored in the database 3 via the remote control unit 2. The ambient sensor 7 also detects a wind direction 8 relative to the wind turbine 1 which in turn is also stored in the database 3. The wind turbine 1 may use a yaw system (not shown) to track or align the rotor with the wind direction. Optionally, at least one operating sensor 9 is arranged relative to the drive train 6. The operating sensor 9 is configured to measure at least one operating parameter which may be stored in the database 3 also.

Fig. 2 shows an exemplary flowchart of the control method according to the invention for optimising the overall power production of the wind turbine farm. The present control method is in example implemented on an operating system running on the remote control unit 2, e.g. as in a control module capable of communicating with an existing control system.

In an initial step, the ambient parameters are measured over time and stored in the database 3 to form a set of historical ambient data. Optionally, the operating parameters are also measured over time and stored in the database 3 to form a set of historical operating data.

A controller in the remote control unit 2 is configured to detect a current wind direction 8 relative to the wind turbine farm. The controller then selects a wind turbine 1 from a first group of wind turbines 1 which face the free airflow of the incoming wind. The controller further selects another wind turbine 1 from at least a second group of wind turbines 1 which are subjected to the shadow or wake effect from at least one wind turbine 1 in the first group. The upwind and downwind wind turbines are selected as function of the wind direction.

The controller determines a first power output from the selected upwind wind turbine 1 based on at least these ambient data. The controller further determines a second power output from the selected downwind wind turbine 1 based on at least these ambient data. Alternatively, the controller determines the first and second power outputs based on power measurements stored in the database 3. Said first and second power outputs are then used to determine a relationship between the first power output and the second power output.

The controller then uses this relationship to determine an operating level for the selected upwind wind turbine 1. The operating level is a reduced operating level, which in turn reduces the power output of this upwind wind turbine 1. This means that the turbulence and, thus, the shadow or wake effect experienced by the selected downwind wind turbine is reduced. The downwind wind turbine 1 is thus able to generate a greater power output which in turn compensates for the reduced power output of the upwind wind turbine 1.

The process is then repeated for another selected wind turbine 1 of the first group and another selected wind turbine 1 of the second group. The process is repeated until all wind turbines 1 of at least the first group have been selected, or until all wind turbines of the first and second groups have been selected.

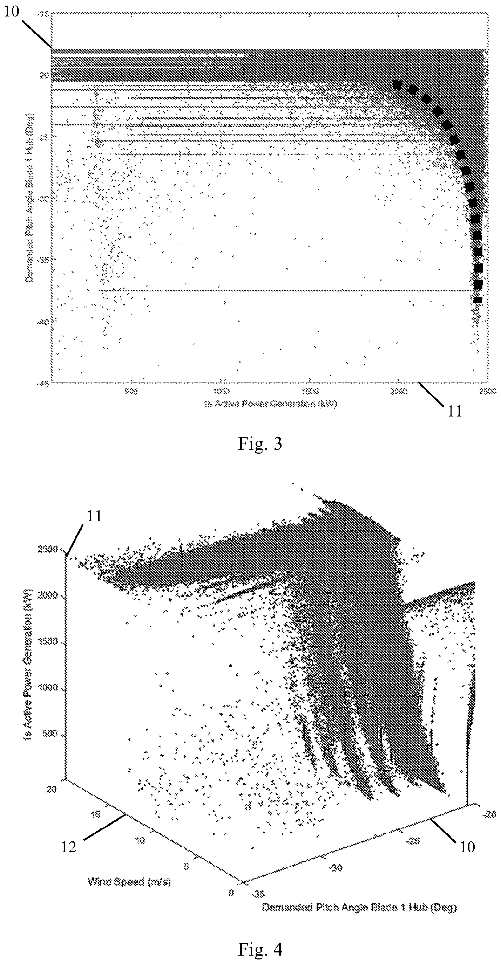

Fig. 3 shows an exemplary graph of a pitch angle 10 as function of a power output 11 of a selected wind turbine 1 in the wind turbine farm. Fig. 4 shows an exemplary graph of the power output 11 as function of the pitch angle 10 and a measured wind speed 12 of the selected wind turbine 1. Here, the selected wind turbine 1 has a power rating of 2.5 megawatt (MW).

The remote control unit 2, e.g. the controller thereof, generates a new power set-point for the selected upwind wind turbine 1 by using the determined relationship as mentioned earlier. The controller may use a normal power set-point as an input for generating this new power set-point. The normal power set-point may be received from the selected wind turbine 1 or from the database 3. The new power set-point, which is lower than the normal power set-point, is then transmitted to the selected upwind wind turbine 1. The local control system thereof adjusts the local control parameters, e.g. the pitch angle 10, accordingly so that it reaches the reduced operating level. In example, the operating level of the selected wind turbine 1 may be reduced from 2.5 MW as shown in figs. 3 and 4 to an operating level of 2 MW. The selected wind turbine 1 is thus able to independently adjust its local control parameters according to the received new power set-point. This also allows the present system to be adapted to communicate with the local control system of different wind turbine manufactures and different firmwares located in different types of wind turbines.

Optionally, the local control system may use a unique relationship (indicated by dotted line in fig. 3) between the power output 11 and the pitch angle 10 to adjust a normal pitch angle to a new pitch angle. This, in turn, reduces the operating level of the selected wind turbine 1.

The controller in the remote control unit 2 may use a look-up table to determine the reduced operating level for the selected upwind wind turbine 1. The look-up table comprises at least the wind direction, the determined relationship, the first power output, the second power output, or other suitable data. The controller optionally has a self-learning function which is used to update the table values, e.g. after completing the control process described above. This reduces the amount of processor power required and allows the remote control unit 2 to determine a suitable trade-off between the power loss of the upwind wind turbine 1 and the increase in power of the downwind wind turbine 1.

## Claims

1. A system for controlling the operation of a wind turbine farm comprising a plurality of wind turbines (1) and a remote control unit (2) configured to communicate with said wind turbines (1) and at least one database (3), the at least one database (3) is configured to store at least ambient data retrieved from at least one ambient sensor configured to measure at least one ambient parameter, wherein each of said wind turbines (1) comprises at least two wind turbine blades (4) mounted to a hub (5) which is further rotatably connected to a drive train (6), the remote control unit (2) is configured to identify at least one upwind wind turbine and at least one downwind wind turbine amongst said wind turbines (1) based on a detected wind direction (8), the remote control unit (2) is configured to determine a first power output of the at least one upwind wind turbine and a second power output of the at least one downwind wind turbine, wherein the at least one upwind wind turbine is selected amongst a first group of wind turbines (1) located upwind relative to the detected wind direction (8), the at least one downwind wind turbine is selected amongst at least a second group of wind turbines (1) located downwind relative to the first group of wind turbines (1), and the remote control unit (2) is further configured to determine a reduced operating level of the at least one upwind wind turbine so that, when operated according to this reduced operating level, the at least one upwind and downwind wind turbines combined increase the overall power production of the wind turbine farm, **characterised in that** the remote control unit (2) is further configured to analyse the first power output and the second power output to determine a first correlation between the first power output and the second power output by statistical analysis, wherein the first correlation is indicative of an added amount of power produced by the at least one downwind wind turbine relative to a reduced amount of power produced by the at least one upwind wind turbine, and the reduced operating level of the at least one upwind wind turbine is determined based on said first correlation.

2. A system according to claim 1, **characterised in that** the remote control unit (2) is configured to calculate at least a second correlation between a power output of another selected wind turbine (1) of the first group and a power output of another selected wind turbine (1) of the at least second group using statistical analysis, and to determine a reduced operating level of said another selected wind turbine (1) of the first group based on said at least second correlation so that, when operated according to this reduced operating level, the another selected wind turbines (1) combined further increase the overall power production of the wind turbine farm.

3. A system according to claim 2, **characterised in that** said first and second correlations are averaged, and the averaged correlation is used to determine the reduced operating level for all upwind wind turbines of the first group.

4. A system according to any one of claims 1 to 3, **characterised in that** the remote control unit (2) is a server unit, wherein at least an operating system is configured to run the server unit and to communicate with the wind turbines (1) and the at least one database (3).

5. A system according to any one of claims 1 to 4, **characterised in that** the remote unit (2) is further configured to calculate a first energy yield of the at least one upwind wind turbine based on the first power output and a second energy yield of the at least one downwind wind turbine based on the second power output.

6. A system according to claim 5, **characterised in that** at least one operating sensor (9) is arranged in one of the wind turbines (1) and configured to measure at least one operating parameter of said one wind turbine, wherein the at least one operating parameter is further stored in the at least one database (3) and analysed by the control unit (2).

7. A system according to any one of claims 1 to 6, **characterised in that** at least the first correlation is derived from a look-up table.

8. A system according to any one of claims 1 to 7, **characterised in that** the control unit (2) is further configured to generate a power set-point for the at least one upwind wind turbine based on the determined reduced operating level, wherein the power set-point is lower than a normal power set-point.

9. A method for controlling the operation of a wind turbine farm, comprising a plurality of wind turbines (1) and a remote control unit (2) configured to communicate with said wind turbines (1), wherein each of said wind turbines (1) comprises at least two wind turbine blades (4) mounted to a hub (5) which is further rotatably connected to a drive train (6), wherein the method comprises the steps of:
- measuring at least one ambient parameter using at least one ambient sensor (7), and storing at least the ambient data in at least one database (3),
- detecting a wind direction (8),
- selecting at least one upwind wind turbine amongst a first group of wind turbines (1) which is located upwind relative to the detected wind direction (8),
- selecting at least one downwind wind turbine amongst at least a second group of wind turbines (1) which is located downwind relative to the first group of wind turbines,
- determining a first power output of the at least one upwind wind turbine and a second power output of the at least one downwind wind turbine,
- determining a reduced operating level of the at least one upwind wind turbine,
- operating the at least one upwind wind turbine so that the at least one upwind and downwind wind turbines combined increase the overall power production of the wind turbine farm, **characterised by** further comprising the steps of:
- determining a first correlation between the first power output and the second power output using statistical analysis, wherein the first correlation is indicative of an added amount of power produced by the at least one downwind wind turbine relative to a reduced amount of power produced by the at least one upwind wind turbine,
- wherein the reduced operating level of the at least one upwind wind turbine is determined based on said first correlation.

10. A method according to claim 9, **characterised in that** the method further comprises the step of calculating at least a second correlation between a power output of another selected wind turbine of the first group and a power output of another selected wind turbine of the at least second group using statistical analysis, and determining a reduced operating level of said another selected wind turbine of the first group based on said at least second correlation.

11. A method according to any one of claims 9 to 10, **characterised in that** the method further comprises the step of calculating a first energy yield of the at least one upwind wind turbine based on the first power output, and calculating a second energy yield of the at least one downwind wind turbine based on the second power output.

12. A method according to any one of claims 9 to 11, **characterised in that** the method further comprises the step of generating a power set-point for the at least one upwind wind turbine based on the determined reduced operating level, wherein the power set-point is lower than a normal power set-point.

## Patentansprüche

1. System zum Steuern des Betriebs eines Windturbinenparks, umfassend eine Vielzahl von Windturbinen (1) und eine Fernsteuereinheit (2), welche dazu konfiguriert ist, mit den Windturbinen (1) und mindestens einer Datenbank (3) zu kommunizieren, wobei die mindestens eine Datenbank (3) dazu konfiguriert ist, mindestens Umgebungsdaten zu speichern, welche von mindestens einem Umgebungssensor empfangen werden, welcher dazu konfiguriert ist, mindestens einen Umgebungsparameter zu messen, wobei jede der Windturbinen (1) mindestens zwei Windturbinenrotorblätter (4) umfasst, welche an einer Nabe (5) befestigt sind, welche ferner drehbar mit einem Antriebsstrang (6) verbunden ist, wobei die Fernsteuereinheit (2) dazu konfiguriert ist, mindestens eine dem Wind zugewandte Windturbine und mindestens eine vom Wind abgewandte Windturbine von den Windturbinen (1) basierend auf einer erkannten Windrichtung (8) zu identifizieren, wobei die Fernsteuereinheit (2) dazu konfiguriert ist, eine erste Leistungsausgabe der mindestens einen dem Wind zugewandten Windturbine und einer zweiten Leistungsausgabe der mindestens einen vom Wind abgewandten Windturbine zu bestimmen, wobei die mindestens eine dem Wind zugewandte Windturbine ausgewählt ist aus einer ersten Gruppe von Windturbinen (1), welche sich in Aufwindrichtung bezogen auf die erkannte Windrichtung (8) befindet, wobei die mindestens eine vom Wind abgewandte Windturbine ausgewählt ist aus mindestens einer zweiten Gruppe von Windturbinen (1), welche sich in Abwindrichtung bezogen auf die erste Gruppe von Windturbinen (1) befindet, und wobei die Fernsteuereinheit (2) ferner dazu konfiguriert ist, einen reduzierten Betriebsgrad der mindestens einen dem Wind zugewandten Windturbine zu bestimmen, so dass die mindestens eine Aufwind- und vom Wind abgewandte Windturbine zusammen die Gesamtleistungsproduktion des Windturbinenparks erhöhen, wenn sie gemäß diesem reduzierten Betriebsgrad betrieben werden, **dadurch gekennzeichnet, dass** die Fernsteuereinheit (2) ferner dazu konfiguriert ist, die erste Leistungsausgabe und die zweite Leistungsausgabe zu analysieren, um einen ersten Zusammenhang zwischen der ersten Leistungsausgabe und der zweiten Leistungsausgabe mithilfe einer statistischen Analyse zu bestimmen, wobei der erste Zusammenhang eine hinzugefügte Menge von Leistung, welche durch die mindestens eine vom Wind abgewandte Windturbine produziert wird, bezogen auf eine reduzierte Menge von Leistung anzeigt, welche durch die mindestens eine dem Wind zugewandte Windturbine produziert wird, und der reduzierte Betriebsgrad der mindestens einen dem Wind zugewandten Windturbine basierend auf dem ersten Zusammenhang bestimmt wird.

2. System nach Anspruch 1, **dadurch gekennzeichnet, dass** die Fernsteuereinheit (2) dazu konfiguriert ist, mindestens einen zweiten Zusammenhang zwischen einer Leistungsausgabe einer weiteren ausgewählten Windturbine (1) der ersten Gruppe und eine Leistungsausgabe einer weiteren ausgewählten Windturbine (1) der mindestens zweiten Gruppe mithilfe von statistischen Daten zu berechnen, und einen reduzierten Betriebsgrad der weiteren ausgewählten Windturbine (1) der ersten Gruppe basierend auf dem mindestens zweiten Zusammenhang zu bestimmen, so dass die weiteren ausgewählten Windturbinen (1) zusammen die Gesamtleistungsproduktion des Windturbinenparks weiter erhöhen, wenn sie gemäß diesem reduzierten Betriebsgrad betrieben werden.

3. System nach Anspruch 2, **dadurch gekennzeichnet, dass** der erste und zweite Zusammenhang gemittelt sind, und dass der gemittelte Zusammenhang dazu verwendet wird, den reduzierten Betriebsgrad für alle dem Wind zugewandten Windturbinen der ersten Gruppe zu bestimmen.

4. System nach einem der Ansprüche 1 bis 3, **dadurch gekennzeichnet, dass** die Fernsteuerungseinheit (2) eine Servereinheit ist, wobei mindestens ein Betriebssystem dazu konfiguriert ist, die Servereinheit auszuführen und mit den Windturbinen (1) und der mindestens einen Datenbank (3) zu kommunizieren.

5. System nach einem der Ansprüche 1 bis 4, **dadurch gekennzeichnet, dass** die Ferneinheit (2) ferner dazu konfiguriert ist, eine erste Energieausbeute der mindestens einen dem Wind zugewandten Windturbine basierend auf der ersten Leistungsausgabe und eine zweite Energieausbeute der mindestens zweiten vom Wind abgewandten Turbine basierend auf der zweiten Leistungsausgabe zu berechnen.

6. System nach Anspruch 5, **dadurch gekennzeichnet, dass** mindestens ein Betriebssensor (9) in einer der Windturbinen (1) angeordnet ist und dazu konfiguriert ist, mindestens einen Betriebsparameter der einen Windturbine zu messen, wobei der mindestens eine Betriebsparameter ferner in der mindestens einen Datenbank (3) gespeichert ist und durch die Steuereinheit (2) analysiert wird.

7. System nach einem der Ansprüche 1 bis 6, **dadurch gekennzeichnet, dass** mindestens der erste Zusammenhang aus einer Nachschlagetabelle abgeleitet ist.

8. System nach einem der Ansprüche 1 bis 7, **dadurch gekennzeichnet, dass** die Steuereinheit (2) ferner dazu konfiguriert ist, einen Leistungssollwert für die mindestens eine dem Wind zugewandte Windturbine basierend auf dem bestimmten reduziertem Betriebsgrad zu erzeugen, wobei der Leistungssollwert geringer ist als ein normaler Leistungssollwert.

9. Verfahren zum Steuern des Betriebs eines Windturbinenparks, umfassend eine Vielzahl von Windturbinen (1) und eine Fernsteuereinheit (2), welche dazu konfiguriert ist, mit den Windturbinen (1) zu kommunizieren, wobei jede der Windturbinen (1) mindestens zwei Windturbinenrotorblätter (4) umfasst, welche an einer Nabe (5) befestigt sind, welche ferner drehbar mit einem Antriebsstrang (6) verbunden ist, wobei das Verfahren die folgenden Schritte umfasst:
- Messen mindestens eines Umgebungsparameters mithilfe mindestens eines Umgebungssensors (7), und Speichern mindestens der Umgebungsdaten in mindestens einer Datenbank (3),
- Erkennen einer Windrichtung (8),
- Auswählen mindestens einer dem Wind zugewandten Windturbine aus einer ersten Gruppe von Windturbinen (1), welche sich bezogen auf die erkannte Windrichtung (8) dem Wind zugewandt befindet,
- Auswählen mindestens einer vom Wind abgewandten Windturbine aus mindestens einer zweiten Gruppe von Windturbinen (1), welche sich bezogen auf die erste Gruppe von Windturbinen vom Wind abgewandt befindet,
- Bestimmen einer ersten Leistungsausgabe der mindestens einen dem Wind zugewandten Windturbine und einer zweiten Leistungsausgabe der mindestens einen vom Wind abgewandten Windturbine,
- Bestimmen eines reduzierten Betriebsgrads der mindestens einen dem Wind zugewandten Windturbine,
- Betreiben der mindestens einen dem Wind zugewandten Windturbine, so dass die mindestens eine dem Wind zugewandte und vom Wind abgewandte Windturbine zusammen die Gesamtleistungsproduktion des Windturbinenparks erhöhen, **dadurch gekennzeichnet, dass** es ferner die folgenden Schritte umfasst:
- Bestimmen eines ersten Zusammenhangs zwischen der ersten Leistungsausgabe und der zweiten Leistungsausgabe mithilfe einer statistische Analyse, wobei der erste Zusammenhang eine hinzugefügte Menge von Leistung, welche durch die mindestens eine vom Wind abgewandte Windturbine produziert wird, bezogen auf eine reduzierte Menge von Leistung anzeigt, welche durch die mindestens eine vom Wind abgewandte Windturbine produziert wird,
- wobei der reduzierte Betriebsgrad der mindestens einen dem Wind zugewandten Windturbine basierend auf dem ersten Zusammenhang bestimmt wird.

10. Verfahren nach Anspruch 9, **dadurch gekennzeichnet, dass** das Verfahren ferner den Schritt des Berechnens von mindestens einem zweiten Zusammenhang zwischen einer Leistungsausgabe einer weiteren ausgewählten Windturbine der ersten Gruppe und einer Leistungsausgabe einer weiteren ausgewählten Windturbine der mindestens zweite Gruppe mithilfe von statistischer Analyse, und ein Bestimmen eines reduzierten Betriebsgrads der weiteren ausgewählten Windturbine der ersten Gruppe basierend auf dem mindestens zweiten Zusammenhang umfasst.

11. Verfahren nach einem der Ansprüche 9 bis 10, **dadurch gekennzeichnet, dass** das Verfahren ferner den Schritt des Berechnens einer erste Energieausbeute der mindestens einen dem Wind zugewandten Windturbine basierend auf der ersten Leistungsausgabe und ein Berechnen einer zweiten Energieausbeute der mindestens einen vom Wind abgewandten Windturbine basierend auf der zweiten Leistungsausgabe umfasst.

12. Verfahren nach einem der Ansprüche 9 bis 11, **dadurch gekennzeichnet, dass** das Verfahren ferner den Schritt des Erzeugens eines Leistungssollwerts für die mindestens eine dem Wind zugewandte Windturbine basierend auf dem bestimmten reduzierten Betriebsgrad umfasst, wobei der Leistungssollwert geringer ist als ein normaler Leistungssollwert.

## Revendications

1. Système de contrôle du fonctionnement d'un parc éolien comprenant une pluralité d'éoliennes (1) et une unité de commande à distance (2) configurée pour communiquer avec lesdites éoliennes (1) et au moins une base de données (3), l'au moins une base de données (3) est configurée pour stocker au moins des données ambiantes extraites d'au moins un capteur ambiant configuré pour mesurer au moins un paramètre ambiant, dans lequel chacune desdites éoliennes (1) comprend au moins deux pales d'éolienne (4) montées sur un moyeu (5) qui est en outre relié de manière rotative à une chaîne cinématique (6), l'unité de commande à distance (2) est configurée pour identifier au moins une éolienne contre le vent et au moins une éolienne sous le vent parmi lesdites éoliennes (1) sur la base d'une direction de vent détectée (8), l'unité de commande à distance (2) est configurée pour déterminer une première puissance de sortie de l'au moins une éolienne contre le vent et une seconde puissance de sortie de l'au moins une éolienne sous le vent, dans lequel l'au moins une éolienne contre le vent est sélectionnée parmi un premier groupe d'éoliennes (1) situées contre le vent par rapport à la direction du vent détectée (8), l'au moins une éolienne sous le vent est sélectionnée parmi au moins un second groupe d'éoliennes (1) situé sous le vent par rapport au premier groupe d'éoliennes (1), et l'unité de commande à distance (2) est en outre configurée pour déterminer un niveau de fonctionnement réduit de l'au moins une éolienne contre le vent de sorte que, lorsqu'elles fonctionnent selon ce niveau de fonctionnement réduit, l'au moins une éolienne contre le vent et une éolienne sous le vent combinées augmentent la production de puissance globale du parc éolien, **caractérisé en ce que** l'unité de commande à distance (2) est en outre configurée pour analyser la première puissance de sortie et la seconde puissance de sortie pour déterminer une première corrélation entre la première puissance de sortie et la seconde puissance de sortie par analyse statistique, dans lequel la première corrélation indique une quantité de puissance supplémentaire produite par l'au moins une éolienne sous le vent par rapport à une quantité réduite de puissance produite par l'au moins une éolienne contre le vent, et le niveau de fonctionnement réduit de l'au moins une éolienne contre le vent est déterminé sur la base de ladite première corrélation.

2. Système selon la revendication 1, **caractérisé en ce que** l'unité de commande à distance (2) est configurée pour calculer au moins une seconde corrélation entre une puissance de sortie d'une autre éolienne sélectionnée (1) du premier groupe et une puissance de sortie d'une autre éolienne sélectionnée (1) d'au moins le second groupe à l'aide d'une analyse statistique, et pour déterminer un niveau de fonctionnement réduit de ladite autre éolienne sélectionnée (1) du premier groupe sur la base de ladite au moins une seconde corrélation de sorte que, lorsqu'elle fonctionne selon ce niveau de fonctionnement réduit, les autres éoliennes sélectionnées (1) combinées augmentent encore la production de puissance globale du parc éolien.

3. Système selon la revendication 2, **caractérisé en ce que** lesdites première et seconde corrélations sont moyennées, et la corrélation moyenne est utilisée pour déterminer le niveau de fonctionnement réduit pour toutes les éoliennes contre le vent du premier groupe.

4. Système selon l'une quelconque des revendications 1 à 3, **caractérisé en ce que** l'unité de commande à distance (2) est une unité serveur, dans lequel au moins un système de fonctionnement est configuré pour exécuter l'unité serveur et pour communiquer avec les éoliennes (1) et l'au moins une base de données (3).

5. Système selon l'une quelconque des revendications 1 à 4, **caractérisé en ce que** l'unité à distance (2) est en outre configurée pour calculer un premier rendement énergétique de l'au moins une éolienne contre le vent sur la base de la première puissance de sortie et un second rendement énergétique de l'au moins une éolienne sous le vent sur la base de la seconde puissance de sortie.

6. Système selon la revendication 5, **caractérisé en ce qu'**au moins un capteur de fonctionnement (9) est disposé dans l'une des éoliennes (1) et configuré pour mesurer au moins un paramètre de fonctionnement de ladite une éolienne, dans lequel l'au moins un paramètre de fonctionnement est en outre stocké dans l'au moins une base de données (3) et analysé par l'unité de commande (2) .

7. Système selon l'une quelconque des revendications 1 à 6, **caractérisé en ce qu'**au moins la première corrélation est dérivée d'une table de correspondance.

8. Système selon l'une quelconque des revendications 1 à 7, **caractérisé en ce que** l'unité de commande (2) est en outre configurée pour générer un point de consigne de puissance pour l'au moins une éolienne contre le vent sur la base du niveau de fonctionnement réduit déterminé, dans lequel le point de consigne de puissance est inférieure à un point de consigne de puissance normale.

9. Procédé de contrôle du fonctionnement d'un parc éolien, comprenant une pluralité d'éoliennes (1) et une unité de commande à distance (2) configurée pour communiquer avec lesdites éoliennes (1), dans lequel chacune desdites éoliennes (1) comprend au moins deux pales d'éolienne (4) montées sur un moyeu (5) qui est en outre raccordé de manière rotative à une chaîne cinématique (6), dans lequel le procédé comprend les étapes :
- de mesure d'au moins un paramètre ambiant à l'aide d'au moins un capteur ambiant (7), et de stockage des données ambiantes au moins dans au moins une base de données (3),
- de détection d'une direction du vent (8),
- de sélection d'au moins une éolienne contre le vent parmi un premier groupe d'éoliennes (1) qui est situé contre le vent par rapport à la direction du vent détectée (8),
- de sélection d'au moins une éolienne sous le vent parmi au moins un second groupe d'éoliennes (1) qui est situé sous le vent par rapport au premier groupe d'éoliennes,
- de détermination d'une première puissance de sortie de l'au moins une éolienne contre le vent et d'une seconde puissance de sortie de l'au moins une éolienne sous le vent,
- de détermination d'un niveau de fonctionnement réduit de l'au moins une éolienne contre le vent,
- de fonctionnement de l'au moins une éolienne contre le vent de sorte que les au moins une éolienne contre le vent et une éolienne sous le vent combinées augmentent la production de puissance globale du parc éolien, **caractérisé en ce qu'**il comprend en outre les étapes de :
- de détermination d'une première corrélation entre la première puissance de sortie et la seconde puissance de sortie à l'aide d'une analyse statistique, dans lequel la première corrélation indique une quantité de puissance supplémentaire produite par l'au moins une éolienne sous le vent par rapport à une quantité réduite de puissance produite par l'au au moins une éolienne contre le vent,
- dans lequel le niveau de fonctionnement réduit de l'au moins une éolienne contre le vent est déterminé sur la base de ladite première corrélation.

10. Procédé selon la revendication 9, **caractérisé en ce que** le procédé comprend en outre l'étape de calcul d'au moins une seconde corrélation entre une puissance de sortie d'une autre éolienne sélectionnée du premier groupe et une puissance de sortie d'une autre éolienne sélectionnée d'au moins le second groupe à l'aide d'une analyse statistique, et la détermination d'un niveau de fonctionnement réduit de ladite autre éolienne sélectionnée du premier groupe sur la base de ladite au moins une seconde corrélation.

11. Procédé selon l'une quelconque des revendications 9 à 10, **caractérisé en ce que** le procédé comprend en outre l'étape de calcul d'un premier rendement énergétique de l'au moins une éolienne contre le vent sur la base de la première puissance de sortie, et de calcul d'un second rendement énergétique de l'au moins une éolienne sous le vent sur la base de la seconde puissance de sortie.

12. Système selon l'une quelconque des revendications 9 à 11, **caractérisé en ce que** le procédé comprend en outre l'étape de génération d'un point de consigne de puissance pour l'au moins une éolienne contre le vent sur la base du niveau de fonctionnement réduit déterminé, dans lequel le point de consigne de puissance est inférieure à un point de consigne de puissance normale.
